# EUROPEAN PATENT APPLICATION

(11) **EP 4 800 434 A1**
(43) Date of publication of application: **02.09.2026**
(21) Application number: 26156265.6
(22) Date of filing: 04.02.2026
(51) Int. Cl.: G01S 7/481, G01S 7/499, G01S 17/95

(54) **SOLAR FILTERING FOR ATMOSPHERIC LIDAR**

(30) Priority: 27.02.2025 US 202519065795
(71) Applicant: Honeywell International Inc., Charlotte, NC 28202 (US)
(72) Inventor: HORAK, Erik, Charlotte, 28202 (US); DOBBINS, Thomas, Charlotte, 28202 (US)
(74) Representative: Haseltine Lake Kempner LLP

(57) **Abstract**

A LiDAR system comprises: laser source(s) to transmit laser light having first polarization toward measurement location(s); detector(s) to receive and determine intensity of backscattered light having second polarization from measurement location(s); polarization adjustment device(s) to control first polarization and thereby second polarization of backscattered light; polarization filtering device(s) to control third polarization of light received at detector(s); and processing circuitry to: identify positions of and determine orientation of detector(s) relative to Sun; determine fourth polarization of solar light received from Sun based on orientation; determine, based on fourth polarization: desired configuration for polarization adjustment device(s) to cause first polarization and fourth polarization to approach perpendicular; and desired configuration for polarization filtering device(s) to cause third polarization to approach parallel with second polarization; and control polarization adjustment device(s) and polarization filtering device(s) to desired configurations to maximize transmission of backscattered light and minimize transmission of solar light to detector(s).

## Description

### BACKGROUND

Light Detection And Ranging (LiDAR) sensors use light to determine distances to objects and/or atmospheric properties, such as temperature, density, winds, humidity, aerosol measurements, and/or turbulence.

### SUMMARY

An atmospheric light detection and ranging (LiDAR) system comprises: at least one laser source configured to transmit outgoing laser light toward at least one measurement location, wherein the outgoing laser light has a first polarization; at least one detector configured to: receive backscattered light backscattered from the at least one measurement location, wherein the backscattered light has a second polarization; and determine a current intensity of the backscattered light; at least one polarization adjustment device configured to control the first polarization of the outgoing laser light and thereby the second polarization of the backscattered light; at least one polarization filtering device configured to control a third polarization of light received at the at least one detector; and processing circuitry configured to: identify a first position of the at least one detector; identify a second position of the Sun; determine a first orientation of the at least one detector relative to the Sun based on the first position of the at least one detector and the second position of the Sun; determine a fourth polarization of solar light received from the Sun based on the first orientation; determine, based on the fourth polarization of the solar light received from the Sun: a first desired configuration for the at least one polarization adjustment device to cause the first polarization of the outgoing laser light and therefore the second polarization of the backscattered light and the fourth polarization of the solar light received from the Sun to approach perpendicular; and a second desired configuration for the at least one polarization filtering device to cause the third polarization of the at least one polarization filtering device to approach parallel with the second polarization of the backscattered light and therefore the first polarization of the outgoing laser light; and control the at least one polarization adjustment device to the first desired configuration and the at least one polarization filtering device to the second desired configuration to maximize transmission of the backscattered light to the at least one detector while minimizing the transmission of the solar light to the at least one detector.

A method of performing atmospheric light detection and ranging (LiDAR) sensing comprises: transmitting, from at least one laser source, outgoing laser light toward at least one measurement location, wherein the outgoing laser light has a first polarization; receiving, using at least one detector, backscattered light backscattered from the at least one measurement location, wherein the backscattered light has a second polarization; determining, using the at least one detector, a current intensity of the backscattered light; controlling, using at least one polarization adjustment device, the first polarization of the outgoing laser light and thereby the second polarization of the backscattered light; controlling, using at least one polarization filtering device, a third polarization of light received at the at least one detector; identifying, using processing circuitry, a first position of the at least one detector; identifying, using the processing circuitry, a second position of the Sun; determining, using the processing circuitry, a first orientation of the at least one detector relative to the Sun based on the first position of the at least one detector and the second position of the Sun; determining, using the processing circuitry, a fourth polarization of solar light received from the Sun based on the first orientation; determining, using the processing circuitry and based on the fourth polarization of the solar light received from the Sun, a first desired configuration for the at least one polarization adjustment device to cause the first polarization of the outgoing laser light and therefore the second polarization of the backscattered light and the fourth polarization of the solar light received from the Sun to approach perpendicular; determining, using the processing circuitry and based on the fourth polarization of the solar light received from the Sun, a second desired configuration for the at least one polarization filtering device to cause the third polarization of the at least one polarization filtering device to approach parallel with the second polarization of the backscattered light and therefore the first polarization of the outgoing laser light; and controlling, using the processing circuitry, the at least one polarization adjustment device to the first desired configuration and the at least one polarization filtering device to the second desired configuration to maximize transmission of the backscattered light to the at least one detector while minimizing the transmission of the solar light to the at least one detector.

An atmospheric light detection and ranging (LiDAR) system comprises: at least one laser source configured to transmit outgoing laser light toward at least one atmospheric region, wherein the outgoing laser light has a first polarization; at least one detector configured to: receive backscattered light backscattered from the at least one atmospheric region, wherein the backscattered light has a second polarization; and determine a current intensity of the backscattered light; at least one polarization adjustment device configured to control the first polarization of the outgoing laser light and thereby the second polarization of the backscattered light; at least one polarization filtering device configured to control a third polarization of light received at the at least one detector; a Global Navigation Satellite System (GNSS) receiver configured to: receive GNSS signals from GNSS satellites by at least one antenna; and determine a current location based on the GNSS signals from the GNSS satellites; and processing circuitry configured to: identify a first position of the at least one detector based on the current location determined by the GNSS receiver; identify a second position of the Sun based on a current date and time and information regarding an orbit of the Earth around the Sun and rotation of the Earth about an axis; determine a first orientation of the at least one detector relative to the Sun based on the first position of the at least one detector and the second position of the Sun; determine a fourth polarization of solar light received from the Sun based on the first orientation; determine, based on the fourth polarization of the solar light received from the Sun: a first desired configuration for the at least one polarization adjustment device to cause the first polarization of the outgoing laser light and therefore the second polarization of the backscattered light and the fourth polarization of the solar light received from the Sun to approach perpendicular; and a second desired configuration for the at least one polarization filtering device to cause the third polarization of the at least one polarization filtering device to approach parallel with the second polarization of the backscattered light and therefore the first polarization of the outgoing laser light; and control the at least one polarization adjustment device to the first desired configuration and the at least one polarization filtering device to the second desired configuration to maximize transmission of the backscattered light to the at least one detector while minimizing the transmission of the solar light to the at least one detector.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1C are block diagrams illustrating example systems having LiDAR systems.
Figure 2 is an example method for operating a LiDAR system.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In examples, Light Detection And Ranging (LiDAR) sensors can be used to determine distances to objects using light. In examples, LiDAR sensors and systems are able to generate representations of a surrounding environment. In examples, LIDAR systems are able to produce large quantities of data and enable detailed representations of environments based on measurements of distances to objects (including the distance from the ground or from objects affixed to the ground). In examples, LiDAR that uses measurement of distances to objects are sometimes referred to as hard target LiDAR.

In examples, atmospheric LiDAR sensors and systems are used to determine atmospheric properties, such as temperature, density, winds, humidity, aerosol measurements, and/or turbulence. In examples, LiDAR sensors and systems can be used to the properties of the atmosphere by looking at the backscattered light off particles and molecules in the air. In examples, LiDAR sensors and systems are able to generate representations of a surrounding environment from the ground surface to the Thermosphere. In examples, LIDAR systems are able to produce large quantities of weather data and enable detailed representations of environments based on measurements of the backscattered light. In examples, LiDAR that determines atmospheric properties are sometimes referred to as atmospheric LiDAR and/or hard target LiDAR.

In examples, High-Altitude LiDAR Atmospheric Sensing (HALAS) technology experiences difficulty making measurements during daytime operation due to increased solar background. In examples, this limits range, signal to noise ratio, and algorithm performance. In examples, a reduction of this solar background enables simpler, more robust, and higher performing data analysis and weather data. In examples, reducing the solar background allows higher performance and simpler data analysis of the HALAS technology. In examples, humidity measurements are key weather data for commercial weather forecasting. In examples, humidity measurements specifically struggle with high solar background.

In examples, an atmospheric light detection and ranging (LiDAR) system comprises a laser system that transmits laser light up into the atmosphere, where the laser light interacts with molecules and aerosols in the air and backscatters light back that is collected using a detector and/or telescope at the atmospheric LiDAR system. In examples, performance of the atmospheric LiDAR system is limited by solar background based on the Sun emitting light at the same (or similar) wavelength to the laser. In examples, the solar background limits the signal to noise ratio. In examples, it is desirable to reduce the solar background without reducing the signal to reduce the loss of the signal as much as possible. In examples, the solar background is higher during the daytime. In examples, there is less (or no) solar background at night because the light from the Sun is not received at the detector and/or telescope of the atmospheric LiDAR system to cause noise to the detected signal from the backscattered light.

In examples, the laser light transmitted by the lasers system is ultraviolet (UV) light. In examples, even though the Sun's solar background is lower in the UV light range, there is still solar background in the UV light range. In examples, at low altitudes, solar background is less of an issue, but at higher altitudes, solar background may result in tens of solar background photons over a twenty minute period of making a measurements, which results in a higher chance that the solar background photons from the Sun are collected by the detector and/or telescope resulting in noise with the signal from the backscattered light. In examples, the lower quantity of air at higher altitudes results in lower quantity of backscattering off of molecules and a reduced signal strength.

In examples, narrow bandwidth filters can be used to reduce the solar background noise. In examples, the light from the laser is narrow in wavelength (such as in the hundreds of nanometers), while the solar background is fairly broad and continuous. In examples, the laser is a pulsed laser, though it can also be a continuous wave laser. In examples, a narrow bandwidth filter centered on the laser wavelength is used before light is received at the detector and/or telescope to reduce the noise. In examples, use of the narrow bandwidth filters is lossy because the narrow bandwidth filters reduce the signal. In examples using narrow bandwidth filters, up to 50% (or more) of the signal can be lost by going through the narrow bandwidth filters. In examples, performance is increased by eliminating or reducing the use of the narrow bandwidth filters.

In examples, an outgoing laser is polarized in a typical s- or p- orientation (vertical or horizontal) depending upon the laser mounting orientation and the laser beam path. In examples, molecular scatter from the atmosphere (signal) is oriented parallel to this outgoing polarization upon return to the telescope. In examples, solar background can be either parallel or perpendicular to this outgoing polarization. In examples, the laser light is polarized. In examples, the backscattered light is sometimes polarized, depending on what it is reflected off. In examples, the sunlight coming back from the Sun is also polarized. In examples, if a polarizer is aligned perpendicular to the direction of polarization of the light from the Sun, the Solar background can be attenuated without attenuating the signal from the backscattered light as much as would happen with use of narrow bandwidth filters. In examples, by lowering the Solar background, the signal to noise ratio (SNR) is potentially increased as long as the signal strength is not attenuated by the same amount as the Solar background. In examples, the Solar background is reduced enough without too much reduction of the signal from the backscattered light and it is not necessary to include any narrow bandwidth filters. In examples, a narrow bandwidth filter may still be used to lower the Solar background further, but with a lower level of attenuation that would be necessary without the aligned polarizer. In examples, a broader bandwidth filter may be used with the aligned polarizer that is less lossy, but is not as good at filtering out the Solar background. In examples, the filters themselves typically let certain wavelengths of light through without regard to polarization.

In examples, placing a polarizer at the return of the telescope (input polarizer) allows some of the solar light to be rejected while maintaining all or most of the signal. In examples, the polarization of the solar light is oriented tangent to a circle with the sun at the origin due to principles of Rayleigh scattering off of molecules. In examples, depending upon the orientation of the outgoing laser relative to position of the Sun in the sky, there exists an optimal orientation of the input polarizer to minimize the solar background. In examples, this orientation is parallel to a line that intersects the Sun. In examples, this input polarizer must still be oriented parallel to the outgoing laser polarization to maximize signal. In examples, both the laser polarization and input polarization have an optimal orientation of parallel to a line that transects the Sun. In examples, this can be done in a various ways. In examples, an additional degree of freedom of the telescope and laser transmitter can be used to physically rotates the system such that the natural s- or p-orientation of the laser is matched with the optimal orientation. In examples, a half-wave plate is used to rotate the outgoing laser polarization in combination with a rotatable input polarizer. In examples, a simpler method for switching between s- and p- polarization of the laser and input polarizer allows for some rudimentary control. In examples, with the laser polarization well understood, the input polarizer can be placed in a fixed state and system orientations chosen to minimized solar background.

In examples, it is desirable to make the laser and polarizer coming into the telescope the same polarization and have both the polarization of the laser and the polarization of the polarizer be perpendicular to the solar light polarization as much as possible. In examples, the laser polarization and the return polarization from the backscattered light is tuned so they align. In examples, the laser light is substantially horizontally polarized while the Sun's solar polarization is substantially vertically polarized and the return light would also be substantially horizontally polarized and a substantially horizontally polarized polarizer could be used to filter out the substantially vertically polarized light from the Sun and allow the substantially horizontally polarized return light to pass. In examples, the polarization of the outgoing laser beam is changed so that it is perpendicular to the polarization of the light from the Sun as much as possible. In examples, on the receive side, the outgoing and incoming light have a substantially similar polarization angle. In examples, when the laser polarization is tuned, the polarizer for the received backscattered light is tuned accordingly. In examples, the determination of how the polarization of the laser and the polarizer for the detector and/or telescope should be adjusted is based on data regarding the position and orientation of the laser and the detector and/or telescope and the position of the Sun in the sky.

In examples, the polarization of the Solar light from the Sun depends on where the laser and detector are pointed relative to the Sun and is different depending on where the laser and detector are pointed relative to the Sun. In examples, equations and/or formals are used to calculate the polarization of the light from the Sun based on the angle the laser and detector are pointing at relative to the position of the Sun in the sky. In examples, calculations can be made of what polarization is expected from the Sun. In examples, these calculations take into consideration the position of the Earth relative to the Sun (based on the known orbits of celestial bodies at particular times), the rotation of the Earth, and/or the position and orientation of the laser and detector and/or telescope. In examples, these calculations also take into consideration information regarding the atmosphere relating to density and scattering physics. In examples, the calculations are based on analytical and/or computation models. In examples, input to the equations and/or formals may include the location and pointing direction of the laser and detector and/or telescope relative to the Sun. In examples, a system can determine its location and the direction it is pointing the laser and detector and/or telescope relative to the Sun very accurately. In examples of stationary systems, the position of the laser and detector and/or telescope may be fixed and known. In examples, a system knows the direction and/or angles at which the laser and detector and/or telescope are pointing. In examples of systems in motion (such as systems on aircraft, satellites, or other moving vehicles), a Global Navigation Satellite System (GNSS) receiver may be used to precisely determine the location of the system.

In examples, the polarization of the light transmitted from the laser and the polarization of the light incoming at the detector and/or telescope are adjusted to match each other and also to both be perpendicular to the solar polarization. In examples, the system is then aligned to have the polarization perpendicular to the polarization expected from the Sun. In examples, the polarization of the light from the Sun is periodically calculated and the system is periodically re-aligned. In examples, the polarization is generally constant for a particular location and the polarization is calculated and aligned once without subsequent re-aligning. In examples, the laser and the detector and/or telescope are mounted together and rotated together. In other examples, the laser and the detector and/or telescope are mounted separately and rotated separately. In examples, the backscattered light comes back in the same direction from where the laser light is transmitted.

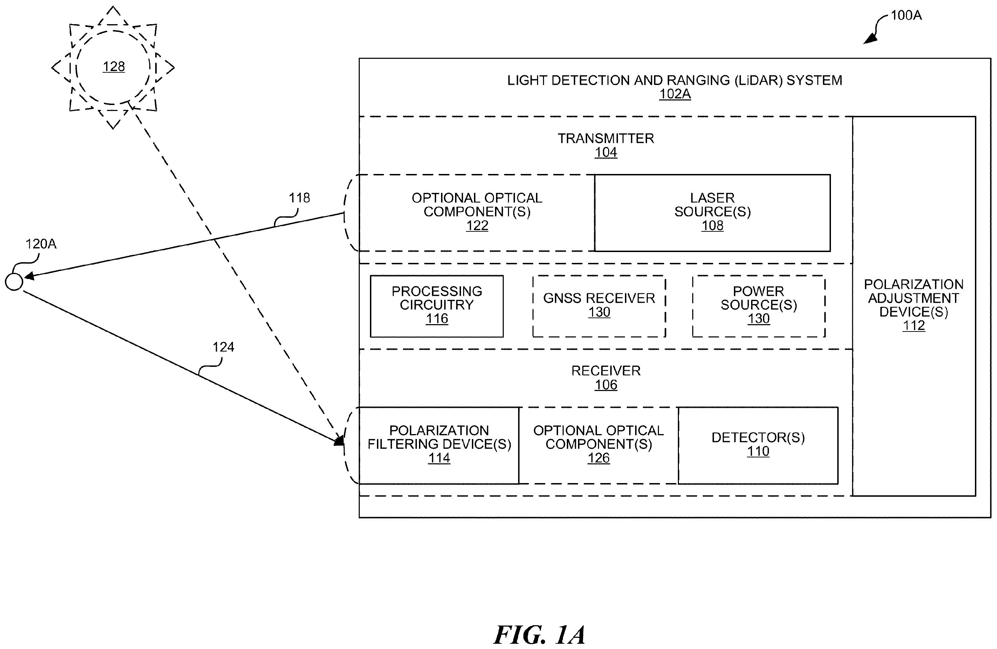

Figures 1A-1C are block diagrams illustrating example systems 100A-100C. In examples, the systems 100A-100C can be implemented at a stationary ground based position or onboard or coupled to a vehicle, held by a person, etc. Use of the term "vehicle" is not intended to be limiting and includes all classes of vehicles falling within the ordinary meaning of the term. This would include but not limited to, aerial traversing vehicles (e.g., commercial, non-commercial, or recreational aircraft), unmanned and/or space traversing vehicles (e.g., satellites, urban air mobility vehicles), water traversing vehicles (e.g., ships, submarines), and land traversing vehicles (e.g., automobiles including cars, trucks, motorcycles). Throughout the disclosure, the vehicle may be described as an aircraft with the understanding that the principles described herein apply to other vehicles where applicable.

Figure 1A is a block diagram of a system 100A having a Light Detection And Ranging (LiDAR) system 102A having components (optionally referred to as a transmitter 104 and a receiver 106) including at least one laser source 108, at least one detector 110, at least one polarization adjustment device 112, at least one polarization filtering device 114, and at least one processing circuitry 116. In examples, the at least one laser source 108 is configured to transmit outgoing laser light 118 (or other light) toward at least one measurement location 120A (such as an atmospheric region, a particle, an object, the ground, a surface, etc.). In examples, the at least one laser light has a first polarization. In examples, the at least one laser source 108 can be any kind of light source generator, including any kind of laser. In examples, the at least one laser source 108 is communicatively coupled to at least one optional optical component 122, which focuses, expands, or otherwise conditions the outgoing laser light 118 (or other light) emitted from the at least one laser source 108.

In examples, at least a portion of the outgoing laser light 118 is backscattered off of the at least one measurement location 120A as backscattered light 124. In examples, the measurement location includes at least one atmospheric region, wherein the backscattered light is backscattered from the at least one atmospheric region and used to measure atmospheric properties (such as temperature, density, winds, humidity, aerosol measurements, and turbulence). In examples, the at least one measurement location 120A includes at least one atmospheric region and/or at least one particle, wherein the light is backscattered from the at least one atmospheric region and/or at least one particle. In other examples, the at least one measurement location 120A includes at least one object and/or at least one surface (such as the ground), wherein the backscattered light is reflected from the at least one object and/or at least one surface and can be used to measure a distance to the at least one object and/or at least one surface.

In examples, the backscattered light 124 is received via the at least one polarization filtering device 114, via the at least one optional optical component 126, and at the at least one detector 110. In examples, light from the Sun 128 is also received at the at least one detector 110 via the at least one polarization filtering device 114 and the at least one optional optical component 126. In examples, the at least one optional optical component 126 includes a telescope which magnifies the backscattered light 124. In examples, the at least one optional optical component 126 includes other optical component(s) which focus, expand, or otherwise condition the backscattered light 124. In examples, the at least one optional optical component 126 includes optical fibers, an interferometer, an optical instrument, a scientific instrument, or other optical component. In examples, the at least one optional optical component 126 comprises at least one telescope positioned between the at least one polarization filtering device and the at least one detector. In examples, the at least one telescope is configured to receive the backscattered light from the at least one measurement location, magnify the backscattered light, and provide the backscattered light to the at least one detector.

In examples, the at least one polarization adjustment device 112 is configured to control the first polarization of the outgoing laser light and thereby the second polarization of the backscattered light. In examples, the at least one polarization adjustment device 112 is rotatable about an axis and the at least one laser source 108 and/or the at least one detector 110 are mounted to the at least one polarization adjustment device 112 and rotatable about the axis. In examples, the at least one polarization adjustment device 112 comprises a half-waveplate, other waveplate, or other optical device. In examples, a first desired configuration for the at least one polarization adjustment device is determined to cause the first polarization of the outgoing laser light and therefore the second polarization of the backscattered light and the fourth polarization for the solar light received from the Sun to approach perpendicular. In examples, the at least one polarization adjustment device 112 is configured to control the first polarization of the outgoing laser light by rotating the at least one laser source 108 about an axis. In examples, the at least one polarization adjustment device 112 is configured to rotate the at least one laser source 108 and the at least one detector 110 about the same axis, such that the first polarization of the at least one laser source 108 matches the second polarization of the at least one detector 110. In examples, the at least one laser source 108 and the at least one detector 110 (and any at least one optional optical component 122) and the at least one detector 110 (and any at least one optional optical component 126 and/or the at least one polarization filtering device 114) are currently mounted to each other such that the at least one laser source 108 and the at least one detector 110 rotate together and stay alighted in polarization. In examples, the at least one polarization adjustment device 112 includes a first device (such as a waveplate) to adjust polarization of the outgoing laser light from the at least one laser source 108 and a second device to adjust polarization of the incoming light received at the at least one detector 110 and the first device and the second device are adjusted simultaneously. In examples, the at least one polarization adjustment device 112 is adjusted electronically and/or mechanically.

In examples, the at least one polarization adjustment device 112 is rotatable. In examples, the at least one laser source 108 is mechanically coupled to the at least one polarization adjustment device 112. In examples, the at least one polarization adjustment device 112 is controlled to the first desired configuration by mechanically rotating the at least one polarization adjustment device 112 to rotate the at least one laser source 108 and cause the first polarization of the outgoing laser light and therefore the second polarization of the backscattered light and the fourth polarization of the solar light received from the Sun 128 to approach perpendicular.

In examples the at least one polarization filtering device 114 is configured to control polarization of the light received at the at least one detector. In examples, the at least one polarization filtering device 114 comprises a rotatable polarization filter that is electronically and/or mechanically rotated. In examples, the at least one polarization filtering device 114 is configured to control the light received at the at least one detector 110 to cause the third polarization of the at least one polarization filtering device to approach parallel with the second polarization of the backscattered light and also the first polarization of the outgoing laser light. In examples, as the second polarization of the backscattered light and the fourth polarization of the solar light received from Sun approach perpendicular, the intensity of the solar background noise from the solar light received from the Sun is greatly reduced by the at least one polarization filtering device 114 while the intensity of the backscattered light backscattered from the at least one measurement location 120A and/or the at least one atmospheric region 120B is not reduced or more minimally reduced. In examples, this occurs because the third polarization of the at least one polarization filtering device is substantially perpendicular to the fourth polarization of the solar light while the third polarization of the at least one polarization filtering device is substantially parallel to the second polarization of the backscattered light.

In examples, the at least one polarization filtering device 114 comprises a polarizing filter. In examples, the at least one polarization filtering device 114 is controlled to the second desired configuration by mechanically rotating the at least one polarization filtering device 114 to cause the third polarization of the at least one polarization filtering device to approach parallel with the second polarization of the backscattered light and therefore the first polarization of the outgoing laser light.

In examples, a half-waveplate is used as the at least one polarization adjustment device 112 to rotate the polarization of the outgoing laser light of the at least one laser source 108 in combination with a rotatable input polarizer used as the at least one polarization filtering device 114 positioned before the at least one detector 110 and/or the at least one polarization filtering device 114 and the least one optional optical component 126 (such as a telescope). In examples, the at least one laser source 108 and/or the at least one detector 110 and/or the at least one optional optical component 126 (such as a telescope) are not physically are not physically rotated, but rather the polarization of the light is rotated in other ways (such as using a half-waveplate to rotate the outgoing polarization of the laser light in combination with a rotatable input polarizer positioned to rotate received light before the at least one detector 110).

In examples, the at least one polarization adjustment device 112 switches between two more different static polarization options, such as switching between a 90 degree polarization option and a 0 degree polarization option. In examples, the at least one polarization adjustment device 112 could be switched between two or more static polarization options to attempt to cause the second polarization of the backscattered light and the fourth polarization for the solar light received from the Sun to be more as close to perpendicular as possible by having the greatest from zero to 90 degrees difference between the angles. In these examples, this can improve the signal even though it does not cause the difference in the angles to very close to 90 degrees.

In examples, where polarization to the Sun 128 is assumed to be at relatively constant angles, a desired orientation can be determined that minimizes average solar background at all the pointing angles. In examples, the transmitted laser light can be aligned with the polarizer as best as possible and then the transmitted laser light is aligned perpendicular to the Sun on average. In examples, this is less effective, but can be a simple, robust, and cost effective approach if it provides acceptable performance, such as in scenarios where a particular LiDAR system 102A is typically pointed at a certain portion of the sky and the Sun is usually in a certain part of the sky during a particular time of year.

In examples, the LiDAR system 102A is positioned on the ground as a ground based system, though it could also be positioned in an aircraft or on a satellite. In examples, the LiDAR system 102A positioned on the ground is stationary, though it could also be portable, positioned on a vehicle, etc. In examples where the LiDAR system 102A is a stationary ground based system, the calculations using the equations is based on our knowledge of the position of the Sun 128 in the sky relative to the ground based system. In examples where the LiDAR system 102A is in a moving vehicle, the position and movement of the vehicle can be taken into consideration in the calculations and in determining how often to make the calculations and realignments.

In examples, the LiDAR system 102A can include additional photodetectors, optical sensors, cameras, or other sensor to actively determine the position of the Sun 128 in the sky. In examples, a photodetector with a polarizer are pointed at the sky and the polarization of the polarizer is rotated to determine what angle has the most polarized light. In examples, a camera with a polarizer are pointed at the sky and the polarization of the polarizer is rotated to determine what angle has the most polarized light.

In examples, the LiDAR system 100A includes optional Global Navigation Satellite System (GNSS) receiver 130 configured to (1) receive GNSS signals from GNSS signals from GNSS satellites by at least one antenna and (2) determine a current location based on the GNSS signals from the GNSS satellites; and wherein the processing circuitry 116 is configured to identify the first position of the at least one detector based on the current location determined by the GNSS receiver. In examples, the processing circuitry 116 is configured to identify the second position of the Sun based on a current date and time and information regarding an orbit of the Earth around the Sun and rotation of the Earth about an axis. In examples, the LiDAR system 102A includes optional power source(s) 132 that provide power to various components of the LiDAR system 102A.

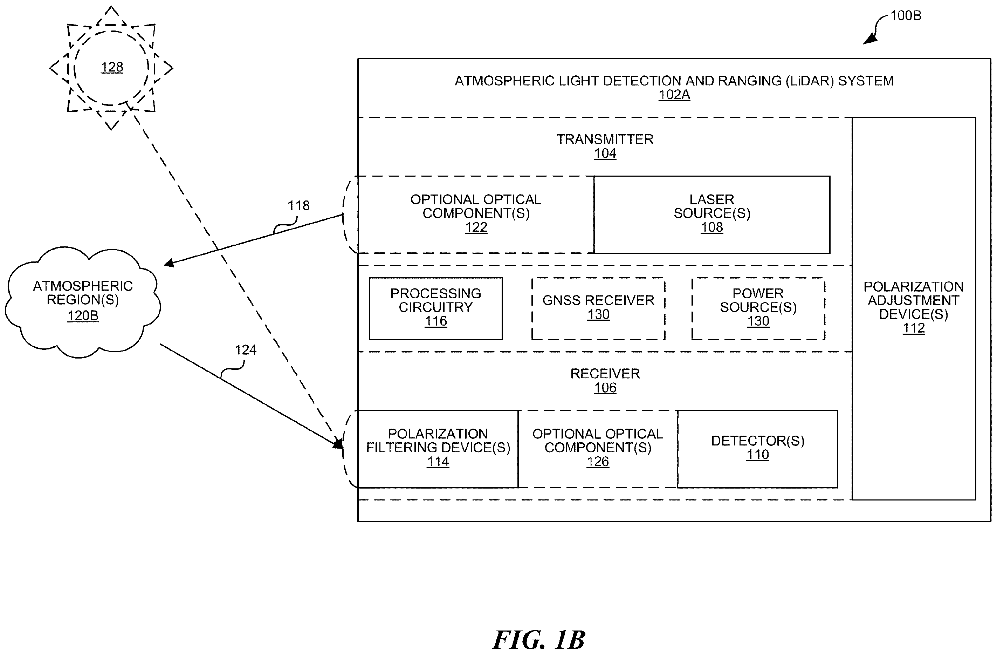

Figure 1B is a block diagram of a system 100B having an atmospheric Light Detection And Ranging (LiDAR) system 102B having components similar to those of LiDAR system 102A described with reference to Figure 1A and system 100A. The atmospheric LiDAR system 102B is a specific implementation of the LiDAR system 102A that is specifically used to measure atmospheric properties (such as temperature, density, winds, humidity, aerosol measurements, and turbulence) of an atmospheric region 120B (which is a specific implementation of the at least one measurement location 120A). In examples, the atmospheric LiDAR system 102B measures atmospheric properties of the at least one atmospheric region 120B by emitting at least one laser into the air where some amount of the light interacts with particles and molecules in the air and is backscattered toward the atmospheric LiDAR system 102B where it is collected and analyzed to determine atmospheric properties, such as temperature, density, winds, humidity, aerosol measurements, and turbulence. In examples, the atmospheric LiDAR system 102B is pointed to measure at a given location within the at least one atmospheric region 120B and the range of the atmospheric LiDAR system 102B is resolved so as to measure at a plurality of altitudes (such as all altitudes) of interest simultaneously. In examples, the atmospheric LiDAR system 102B is mounted to or integrated within an aircraft or other vehicle to measure altitude or other properties.

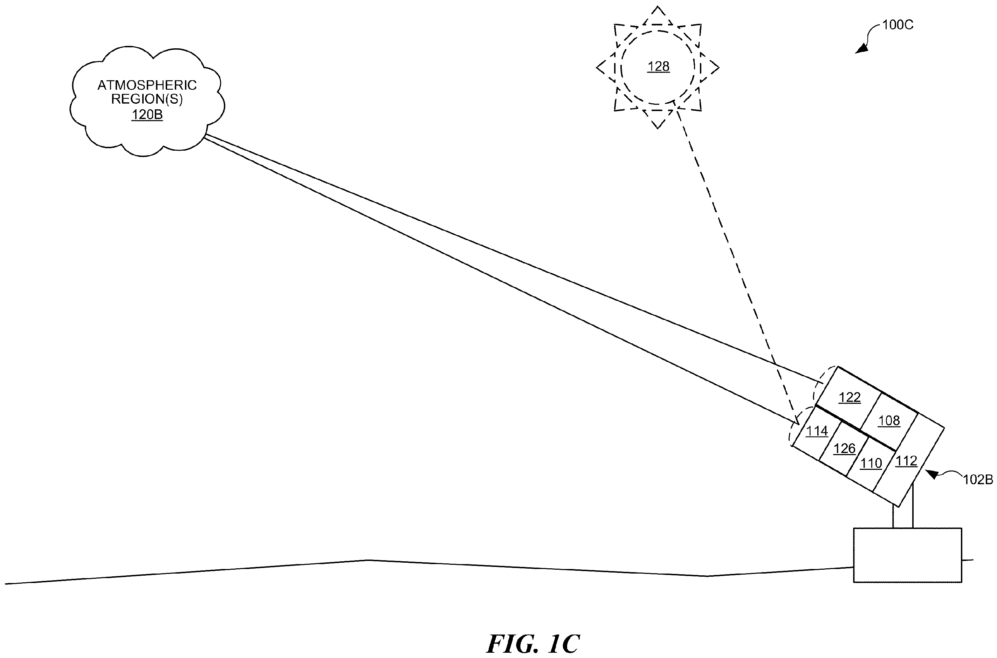

Figure 1C is a block diagram of the system 100B having the atmospheric Light Detection And Ranging (LiDAR) system 102B having components similar to those of LiDAR system 102A described with reference to Figure 1A and system 100A and the LiDAR system 102B described with reference to Figure 1B and system 100C. Figure 1C shows the atmospheric LiDAR system 102B with the at least one polarization adjustment device 112 being used to point at the at least one atmospheric region 120B.

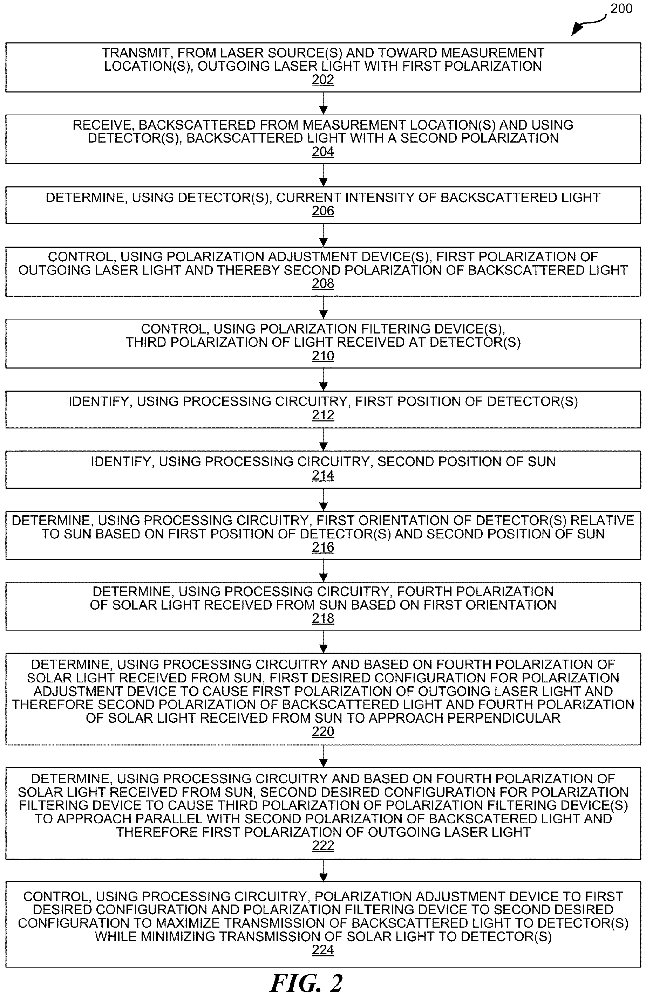

Figure 2 is an example method 200 for operating a Light Detection And Ranging (LiDAR) sensor (such as atmospheric LiDAR system 102). In examples, method 200 begins at block 202 with transmitting, from at least one laser source, outgoing laser light toward at least one measurement location, wherein the outgoing laser light has a first polarization. In examples, method 200 proceeds to block 204 with receiving, using at least one detector, backscattered light backscattered from the at least one measurement location, wherein the backscattered light has a second polarization. In examples, method 200 further comprises: (1) receiving, using at least one telescope positioned between the at least one polarization filtering device and the at least one detector, the backscattered light from the at least one measurement location; (2) magnifying, using the at least one telescope positioned between the at least one polarization filtering device and the at least one detector, the backscattered light from the at least one measurement location; and (3) providing, using the at least one telescope positioned between the at least one polarization filtering device and the at least one detector, the backscattered light to the at least one detector.

In examples, method 200 proceeds to block 206 with determining, using the at least one detector, a current intensity of the backscattered light. In examples, method 200 proceeds to block 208 with controlling, using at least one polarization adjustment device, the first polarization of the outgoing laser light and thereby the second polarization of the backscattered light. In examples, method 200 proceeds to block 210 with controlling, using at least one polarization filtering device, a third polarization of light received at the at least one detector.

In examples, method 200 proceeds to block 212 with identifying, using processing circuitry, a first position of the at least one detector. In examples, method 200 further comprises: (1) receiving, using a Global Navigation Satellite System (GNSS) receiver, GNSS signals from GNSS satellites by at least one antenna; (2) determining, using the GNSS receiver, a current location based on the GNSS signals; and (3) identifying, using the processing circuitry, the first position of the at least one detector based on the current location determined by the GNSS receiver.

In examples, method 200 proceeds to block 214 with identifying, using processing circuitry, a second position of the Sun. In examples, this includes identifying, using the processing circuitry, the second position of the Sun based on a current date and time and information regarding an orbit of the Earth around the Sun and rotation of the Earth about an axis.

In examples, the method 200 proceeds to block 216 with determining, using the processing circuitry, a second orientation of the at least one detector relative to the Sun based on the first position of the at least one detector and the second position of the Sun. In examples, the method 200 proceeds to block 218 with determining, using the processing circuitry, a fourth polarization of the solar light received from the Sun based on the first orientation.

In examples, method 200 proceeds to block 220 with determining, using the processing circuitry and based on the fourth polarization of the solar light received from the Sun, a first desired configuration for the at last one polarization adjustment device to cause the first polarization of the outgoing laser light and therefore the second polarization of the backscattered light and the fourth polarization of the solar light received form the Sun to approach perpendicular. In examples, method 200 pro9ceeds to block 222 with determining, suing the processing circuitry and based on the fourth polarization of the solar light received from the Sun, a second desired configuration for the at least one polarization filtering device to cause the third polarization of the at least one polarization filtering device to approach parallel with the second polarization of the backscattered light and therefore the first polarization for the outgoing laser light.

In examples, method 200 proceeds to block 224 with controlling, using the processing circuitry, the at least one polarization adjustment device to the first desired configuration and the at least one polarization filtering device to the second desired configuration to maximize transmission of the backscattered light to the at least one detector while minimizing the transmission of the solar light to the at least one detector. In examples, the controlling the at least one polarization adjustment device to the first desired configuration is by mechanically rotating the at least one polarization adjustment device to rotate the at least one laser source and cause the first polarization of the outgoing laser light and therefore the second polarization of the backscattered light and the fourth polarization of the solar light received from the Sun to approach perpendicular. In examples, the controlling the at least one polarization filtering device to the second desired configuration is by mechanically rotating the at least one polarization filtering device to cause the third polarization of the at least one polarization filtering device to approach parallel with the second polarization of the backscattered light and therefore the first polarization of the outgoing laser light.

In examples, the measurement location includes at least one atmospheric region, wherein the backscattered light is backscattered from the at least one atmospheric region and used to measure atmospheric properties (such as temperature, density, winds, humidity, aerosol measurements, and turbulence).

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory and storage media, including by way of example random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs), magneto-optical disks, and/or the like. Any of the foregoing may be supplemented by, or incorporated in, any known processor, such as a general purpose processor (GPP) or special purpose (such as a field-programmable gate array (FPGA), application-specific integrated circuit (ASIC) or other integrated circuit or circuitry), or any programmable logic device.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes an atmospheric light detection and ranging (LiDAR) system, the atmospheric LiDAR system comprising: at least one laser source configured to transmit outgoing laser light toward at least one measurement location, wherein the outgoing laser light has a first polarization; at least one detector configured to: receive backscattered light backscattered from the at least one measurement location, wherein the backscattered light has a second polarization; and determine a current intensity of the backscattered light; at least one polarization adjustment device configured to control the first polarization of the outgoing laser light and thereby the second polarization of the backscattered light; at least one polarization filtering device configured to control a third polarization of light received at the at least one detector; and processing circuitry configured to: identify a first position of the at least one detector; identify a second position of the Sun; determine a first orientation of the at least one detector relative to the Sun based on the first position of the at least one detector and the second position of the Sun; determine a fourth polarization of solar light received from the Sun based on the first orientation; determine, based on the fourth polarization of the solar light received from the Sun: a first desired configuration for the at least one polarization adjustment device to cause the first polarization of the outgoing laser light and therefore the second polarization of the backscattered light and the fourth polarization of the solar light received from the Sun to approach perpendicular; and a second desired configuration for the at least one polarization filtering device to cause the third polarization of the at least one polarization filtering device to approach parallel with the second polarization of the backscattered light and therefore the first polarization of the outgoing laser light; and control the at least one polarization adjustment device to the first desired configuration and the at least one polarization filtering device to the second desired configuration to maximize transmission of the backscattered light to the at least one detector while minimizing the transmission of the solar light to the at least one detector.

Example 2 includes the atmospheric LiDAR system of Example 1, further comprising: wherein the at least one polarization adjustment device is rotatable; wherein the at least one laser source is mechanically coupled to the at least one polarization adjustment device; and wherein the at least one polarization adjustment device is controlled to the first desired configuration by mechanically rotating the at least one polarization adjustment device to rotate the at least one laser source and cause the first polarization of the outgoing laser light and therefore the second polarization of the backscattered light and the fourth polarization of the solar light received from the Sun to approach perpendicular.

Example 3 includes the atmospheric LiDAR system of any of Examples 1-2, further comprising: wherein the at least one polarization filtering device comprises a polarizing filter; and wherein the at least one polarization filtering device is controlled to the second desired configuration by mechanically rotating the at least one polarization filtering device to cause the third polarization of the at least one polarization filtering device to approach parallel with the second polarization of the backscattered light and therefore the first polarization of the outgoing laser light.

Example 4 includes the atmospheric LiDAR system of any of Examples 1-3, wherein the at least one measurement location comprises at least one atmospheric region, wherein the backscattered light is backscattered from the at least one atmospheric region.

Example 5 includes the atmospheric LiDAR system of any of Examples 1-4, further comprising: a Global Navigation Satellite System (GNSS) receiver configured to: receive GNSS signals from GNSS satellites by at least one antenna; and determine a current location based on the GNSS signals from the GNSS satellites; and wherein the processing circuitry is configured to: identify the first position of the at least one detector based on the current location determined by the GNSS receiver.

Example 6 includes the atmospheric LiDAR system of any of Examples 1-5, further comprising: wherein the processing circuitry is configured to: identify the second position of the Sun based on a current date and time and information regarding an orbit of the Earth around the Sun and rotation of the Earth about an axis.

Example 7 includes the atmospheric LiDAR system of any of Examples 1-6, further comprising: a Global Navigation Satellite System (GNSS) receiver configured to: receive GNSS signals from GNSS satellites by at least one antenna; and determine a current location based on the GNSS signals from the GNSS satellites; and wherein the processing circuitry is configured to: identify the first position of the at least one detector based on the current location determined by the GNSS receiver; and identify the second position of the Sun based on a current date and time and information regarding an orbit of the Earth around the Sun and rotation of the Earth about an axis.

Example 8 includes the atmospheric LiDAR system of any of Examples 1-7, further comprising: at least one telescope positioned between the at least one polarization filtering device and the at least one detector, the at least one telescope configured to: receive the backscattered light from the at least one measurement location; magnifies the backscattered light; and provide the backscattered light to the at least one detector.

Example 9 includes the atmospheric LiDAR system of any of Examples 1-8, further comprising: at least a first optical component positioned between the at least one laser source and the at least one measurement location; and at least a second optical component positioned between the at least one polarization filtering device and the at least one detector.

Example 10 includes a method of performing atmospheric light detection and ranging (LiDAR) sensing, the method comprising: transmitting, from at least one laser source, outgoing laser light toward at least one measurement location, wherein the outgoing laser light has a first polarization; receiving, using at least one detector, backscattered light backscattered from the at least one measurement location, wherein the backscattered light has a second polarization; determining, using the at least one detector, a current intensity of the backscattered light; controlling, using at least one polarization adjustment device, the first polarization of the outgoing laser light and thereby the second polarization of the backscattered light; controlling, using at least one polarization filtering device, a third polarization of light received at the at least one detector; identifying, using processing circuitry, a first position of the at least one detector; identifying, using the processing circuitry, a second position of the Sun; determining, using the processing circuitry, a first orientation of the at least one detector relative to the Sun based on the first position of the at least one detector and the second position of the Sun; determining, using the processing circuitry, a fourth polarization of solar light received from the Sun based on the first orientation; determining, using the processing circuitry and based on the fourth polarization of the solar light received from the Sun, a first desired configuration for the at least one polarization adjustment device to cause the first polarization of the outgoing laser light and therefore the second polarization of the backscattered light and the fourth polarization of the solar light received from the Sun to approach perpendicular; determining, using the processing circuitry and based on the fourth polarization of the solar light received from the Sun, a second desired configuration for the at least one polarization filtering device to cause the third polarization of the at least one polarization filtering device to approach parallel with the second polarization of the backscattered light and therefore the first polarization of the outgoing laser light; and controlling, using the processing circuitry, the at least one polarization adjustment device to the first desired configuration and the at least one polarization filtering device to the second desired configuration to maximize transmission of the backscattered light to the at least one detector while minimizing the transmission of the solar light to the at least one detector.

Example 11 includes the method of Example 10, further comprising: controlling the at least one polarization adjustment device to the first desired configuration by mechanically rotating the at least one polarization adjustment device to rotate the at least one laser source and cause the first polarization of the outgoing laser light and therefore the second polarization of the backscattered light and the fourth polarization of the solar light received from the Sun to approach perpendicular.

Example 12 includes the method of any of Examples 10-11, further comprising: controlling the at least one polarization filtering device to the second desired configuration by mechanically rotating the at least one polarization filtering device to cause the third polarization of the at least one polarization filtering device to approach parallel with the second polarization of the backscattered light and therefore the first polarization of the outgoing laser light.

Example 13 includes the method of any of Examples 10-12, wherein the at least one measurement location includes at least one atmospheric region, wherein the backscattered light is backscattered from the at least one atmospheric region.

Example 14 includes the method of any of Examples 10-13, further comprising: receiving, using a Global Navigation Satellite System (GNSS) receiver, GNSS signals from GNSS satellites by at least one antenna; determining, using the GNSS receiver, a current location based on the GNSS signals; and identifying, using the processing circuitry, the first position of the at least one detector based on the current location determined by the GNSS receiver.

Example 15 includes the method of any of Examples 10-14, further comprising: identifying, using the processing circuitry, the second position of the Sun based on a current date and time and information regarding an orbit of the Earth around the Sun and rotation of the Earth about an axis.

Example 16 includes the method of any of Examples 10-15, further comprising: receiving, using a Global Navigation Satellite System (GNSS) receiver, GNSS signals from GNSS satellites by at least one antenna; determining, using the GNSS receiver, a current location based on the GNSS signals; identifying, using the processing circuitry, the first position of the at least one detector based on the current location determined by the GNSS receiver; and identifying, using the processing circuitry, the second position of the Sun based on a current date and time and information regarding an orbit of the Earth around the Sun and rotation of the Earth about an axis.

Example 17 includes the method of any of Examples 10-16, further comprising: receiving, using at least one telescope positioned between the at least one polarization filtering device and the at least one detector, the backscattered light from the at least one measurement location; magnifying, using the at least one telescope positioned between the at least one polarization filtering device and the at least one detector, the backscattered light from the at least one measurement location; and providing, using the at least one telescope positioned between the at least one polarization filtering device and the at least one detector, the backscattered light to the at least one detector.

Example 18 includes an atmospheric light detection and ranging (LiDAR) system, the atmospheric LiDAR system comprising: at least one laser source configured to transmit outgoing laser light toward at least one atmospheric region, wherein the outgoing laser light has a first polarization; at least one detector configured to: receive backscattered light backscattered from the at least one atmospheric region, wherein the backscattered light has a second polarization; and determine a current intensity of the backscattered light; at least one polarization adjustment device configured to control the first polarization of the outgoing laser light and thereby the second polarization of the backscattered light; at least one polarization filtering device configured to control a third polarization of light received at the at least one detector; a Global Navigation Satellite System (GNSS) receiver configured to: receive GNSS signals from GNSS satellites by at least one antenna; and determine a current location based on the GNSS signals from the GNSS satellites; and processing circuitry configured to: identify a first position of the at least one detector based on the current location determined by the GNSS receiver; identify a second position of the Sun based on a current date and time and information regarding an orbit of the Earth around the Sun and rotation of the Earth about an axis; determine a first orientation of the at least one detector relative to the Sun based on the first position of the at least one detector and the second position of the Sun; determine a fourth polarization of solar light received from the Sun based on the first orientation; determine, based on the fourth polarization of the solar light received from the Sun: a first desired configuration for the at least one polarization adjustment device to cause the first polarization of the outgoing laser light and therefore the second polarization of the backscattered light and the fourth polarization of the solar light received from the Sun to approach perpendicular; and a second desired configuration for the at least one polarization filtering device to cause the third polarization of the at least one polarization filtering device to approach parallel with the second polarization of the backscattered light and therefore the first polarization of the outgoing laser light; and control the at least one polarization adjustment device to the first desired configuration and the at least one polarization filtering device to the second desired configuration to maximize transmission of the backscattered light to the at least one detector while minimizing the transmission of the solar light to the at least one detector.

Example 19 includes the atmospheric LiDAR system of Example 18, further comprising: wherein the at least one polarization adjustment device is rotatable; wherein the at least one laser source is mechanically coupled to the at least one polarization adjustment device; and wherein the at least one polarization adjustment device is controlled to the first desired configuration by mechanically rotating the at least one polarization adjustment device to rotate the at least one laser source and cause the first polarization of the outgoing laser light and therefore the second polarization of the backscattered light and the fourth polarization of the solar light received from the Sun to approach perpendicular.

Example 20 includes the atmospheric LiDAR system of any of Examples 18-19, further comprising: wherein the at least one polarization filtering device comprises a polarizing filter; and wherein the at least one polarization filtering device is controlled to the second desired configuration by mechanically rotating the at least one polarization filtering device to cause the third polarization of the at least one polarization filtering device to approach parallel with the second polarization of the backscattered light and therefore the first polarization of the outgoing laser light.

## Claims

1. An atmospheric light detection and ranging (LiDAR) system, the atmospheric LiDAR system comprising:
at least one laser source configured to transmit outgoing laser light toward at least one measurement location, wherein the outgoing laser light has a first polarization;
at least one detector configured to:
receive backscattered light backscattered from the at least one measurement location, wherein the backscattered light has a second polarization; and
determine a current intensity of the backscattered light;
at least one polarization adjustment device configured to control the first polarization of the outgoing laser light and thereby the second polarization of the backscattered light;
at least one polarization filtering device configured to control a third polarization of light received at the at least one detector; and
processing circuitry configured to:
identify a first position of the at least one detector;
identify a second position of the Sun;
determine a first orientation of the at least one detector relative to the Sun based on the first position of the at least one detector and the second position of the Sun;
determine a fourth polarization of solar light received from the Sun based on the first orientation;
determine, based on the fourth polarization of the solar light received from the Sun:
a first desired configuration for the at least one polarization adjustment device to cause the first polarization of the outgoing laser light and therefore the second polarization of the backscattered light and the fourth polarization of the solar light received from the Sun to approach perpendicular; and
a second desired configuration for the at least one polarization filtering device to cause the third polarization of the at least one polarization filtering device to approach parallel with the second polarization of the backscattered light and therefore the first polarization of the outgoing laser light; and
control the at least one polarization adjustment device to the first desired configuration and the at least one polarization filtering device to the second desired configuration to maximize transmission of the backscattered light to the at least one detector while minimizing the transmission of the solar light to the at least one detector.

2. The atmospheric LiDAR system of claim 1, further comprising:
wherein the at least one polarization adjustment device is rotatable;
wherein the at least one laser source is mechanically coupled to the at least one polarization adjustment device; and
wherein the at least one polarization adjustment device is controlled to the first desired configuration by mechanically rotating the at least one polarization adjustment device to rotate the at least one laser source and cause the first polarization of the outgoing laser light and therefore the second polarization of the backscattered light and the fourth polarization of the solar light received from the Sun to approach perpendicular.

3. The atmospheric LiDAR system of claim 1, further comprising:
wherein the at least one polarization filtering device comprises a polarizing filter; and
wherein the at least one polarization filtering device is controlled to the second desired configuration by mechanically rotating the at least one polarization filtering device to cause the third polarization of the at least one polarization filtering device to approach parallel with the second polarization of the backscattered light and therefore the first polarization of the outgoing laser light.

4. The atmospheric LiDAR system of claim 1, wherein the at least one measurement location comprises at least one atmospheric region, wherein the backscattered light is backscattered from the at least one atmospheric region.

5. The atmospheric LiDAR system of claim 1, further comprising:
a Global Navigation Satellite System (GNSS) receiver configured to:
receive GNSS signals from GNSS satellites by at least one antenna; and
determine a current location based on the GNSS signals from the GNSS satellites; and
wherein the processing circuitry is configured to:
identify the first position of the at least one detector based on the current location determined by the GNSS receiver.

6. The atmospheric LiDAR system of claim 1, further comprising:
wherein the processing circuitry is configured to:
identify the second position of the Sun based on a current date and time and information regarding an orbit of the Earth around the Sun and rotation of the Earth about an axis.

7. The atmospheric LiDAR system of claim 1, further comprising:
a Global Navigation Satellite System (GNSS) receiver configured to:
receive GNSS signals from GNSS satellites by at least one antenna; and
determine a current location based on the GNSS signals from the GNSS satellites; and
wherein the processing circuitry is configured to:
identify the first position of the at least one detector based on the current location determined by the GNSS receiver; and
identify the second position of the Sun based on a current date and time and information regarding an orbit of the Earth around the Sun and rotation of the Earth about an axis.

8. The atmospheric LiDAR system of claim 1, further comprising:
at least one telescope positioned between the at least one polarization filtering device and the at least one detector, the at least one telescope configured to:
receive the backscattered light from the at least one measurement location;
magnifies the backscattered light; and
provide the backscattered light to the at least one detector.

9. The atmospheric LiDAR system of claim 1, further comprising:
at least a first optical component positioned between the at least one laser source and the at least one measurement location; and
at least a second optical component positioned between the at least one polarization filtering device and the at least one detector.

10. A method of performing atmospheric light detection and ranging (LiDAR) sensing, the method comprising:
transmitting, from at least one laser source, outgoing laser light toward at least one measurement location, wherein the outgoing laser light has a first polarization;
receiving, using at least one detector, backscattered light backscattered from the at least one measurement location, wherein the backscattered light has a second polarization;
determining, using the at least one detector, a current intensity of the backscattered light;
controlling, using at least one polarization adjustment device, the first polarization of the outgoing laser light and thereby the second polarization of the backscattered light;
controlling, using at least one polarization filtering device, a third polarization of light received at the at least one detector;
identifying, using processing circuitry, a first position of the at least one detector;
identifying, using the processing circuitry, a second position of the Sun;
determining, using the processing circuitry, a first orientation of the at least one detector relative to the Sun based on the first position of the at least one detector and the second position of the Sun;
determining, using the processing circuitry, a fourth polarization of solar light received from the Sun based on the first orientation;
determining, using the processing circuitry and based on the fourth polarization of the solar light received from the Sun, a first desired configuration for the at least one polarization adjustment device to cause the first polarization of the outgoing laser light and therefore the second polarization of the backscattered light and the fourth polarization of the solar light received from the Sun to approach perpendicular;
determining, using the processing circuitry and based on the fourth polarization of the solar light received from the Sun, a second desired configuration for the at least one polarization filtering device to cause the third polarization of the at least one polarization filtering device to approach parallel with the second polarization of the backscattered light and therefore the first polarization of the outgoing laser light; and
controlling, using the processing circuitry, the at least one polarization adjustment device to the first desired configuration and the at least one polarization filtering device to the second desired configuration to maximize transmission of the backscattered light to the at least one detector while minimizing the transmission of the solar light to the at least one detector.
